# FASCICULE DE BREVET EUROPEEN

(11) **EP 0 457 681 B1**
(45) Date de publication et mention de la délivrance du brevet: **23.06.1993**
(21) Numéro de dépôt: 91401259.6
(22) Date de dépôt: 15.05.1991
(51) Int. Cl.: F16B 37/04

(54) **Perfectionnements aux dispositifs pour fixer sur des carrosseries des pièces de parement ou analogues**
Vorrichtungen zum Befestigen von Zierleisten oder ähnlichem an Karosserien
Devices for fastening decorative strips or similar to vehicle bodies

(30) Priorité: 17.05.1990 FR 9006175
(43) Date de publication de la demande: 21.11.1991
(73) Titulaire: COMET, F-60304 Senlis Cédex (FR)
(72) Inventeur: Bouery, Roger, F-75018 Paris (FR); Leblaye, Gérard, F-93100 Montreuil (FR)
(74) Mandataire: Behaghel, Pierre

(56) Documents cités:
- DE-A- 1 500 930
- FR-A- 2 131 454
- GB-A- 2 127 730

## Description

L'invention est relative aux dispositifs pour fixer jointivement le long de carrosseries métalliques rigides des pièces de parement, de protection ou analogues constituées en un matériau présentant un coefficient de dilatation différent de celui constitutif de la carrosserie (GB-A-2 127 730).

De telles pièces sont par exemple les baguettes de protection en caoutchouc ou matière plastique qui sont rapportées sur les flancs des véhicules, notamment des véhicules automobiles utilitaires, les tableaux de bord montés dans les habitacles de ces véhicules...

La fixation de chacune de ces pièces sur la carrosserie de support est généralement effectuée en une succession de points fixes alignés de la carrosserie, par exemple au nombre de trois ou quatre.

Cette fixation est généralement réalisée à une température de l'ordre de 20 à 25° et, si la température de la carrosserie varie fortement, il peut résulter de la différence entre les coefficients de dilatation respectifs des matériaux constitutifs de la carrosserie et de la pièce rapportée un décollement de cette pièce entre deux points de fixation successifs ou au contraire une trop grande sollicitation de ladite pièce entre ces deux points si chaque fixation est effectuée rigidement sans possibilité de glissement relatif.

C'est ainsi que, si la carrosserie est portée à une température de 60°, comme il peut advenir si elle est exposée un temps prolongé en plein soleil, on peut observer des différences d'allongement de l'ordre de 3 mm par mètre entre la pièce rapportée et son support et il en est de même, dans le sens inverse, lorsque le véhicule est exposé à des températures très basses, de l'ordre de -15°C.

Pour remédier à tel inconvénient, il a déjà été proposé de rendre possibles les coulissements relatifs de la pièce fixée par rapport à son support en faisant comprendre à l'un de ces deux éléments une lumière oblongue propre à coagir aux fins de coulissement relatif avec un système boulon-écrou ou analogue porté par l'autre élément.

Mais une telle solution ne donne pas satisfaction en raison de ce qu'il est nécessaire de réserver un jeu entre les deux pièces coulissantes pour rendre possibles leurs coulissements respectifs, jeu qui est difficile à régler et qui constitue une source d'usure et de bruit.

L'invention a pour but, surtout, de remédier aux inconvénients signalés.

A cet effet, le dispositif de fixation du genre en question selon l'invention est essentiellement caractérisé en ce qu'il est constitué par une cage de forme parallélépipédique allongée selon la direction des déformations à compenser et prolongée extérieurement du côté destiné à être appliqué contre le support par une embase plate perforée de façon à pouvoir coagir avec au moins une tête d'ancrage prévue sur le support, ladite cage étant ouverte de son côté le plus éloigné de l'embase et contenant un dé de fixation perforé par un alésage d'axe X perpendiculaire à l'embase, ce dé étant placé dans ladite cage de façon à pouvoir coulisser le long des deux grandes parois de cette cage et à être au contraire emprisonné selon la direction de l'axe X.

Dans des modes de réalisation préférés on a recours en outre à l'une et/ou à l'autre des dispositions suivantes :
- le dé est un écrou,
- le dé est évidé par un alésage destiné à servir de guide pour une vis de fixation creusant son filet dans ce dé,
- l'emprisonnement du dé dans la cage, selon la direction perpendiculaire à l'embase, est assuré d'une part, par deux rebords étroits des grandes parois de la cage rabattus vers l'intérieur de cette cage, du côté le plus éloigné de l'embase et, d'autre part, par un renflement faisant saillie intérieurement sur l'une des grandes parois de la cage,
- le dé comprend un col traversant l'intervalle compris entre les deux rebords étroits de la cage et débordant légèrement en dehors de cette cage,
- l'embase qui prolonge la cage est bordée par des bourrelets étroits constituant les portées d'application du dispositif contre le support,
- l'embase est évidée par deux lumières allongées et alignées selon la direction de la longueur de la cage, lumières propres à coagir respectivement avec deux têtes d'ancrage préalablement fixées sur le support,
- il est prévu un voile triangulaire de renfort s'étendant perpendiculairement à l'embase et raccordant celle-ci à l'une des grandes parois latérales de la cage,
- la cage contient deux pattes élastiques interposées chacune entre le dé perforé et l'une des petites parois latérales, pattes propres à solliciter constamment le dé vers sa position médiane dans la cage.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre partiellement un véhicule équipé d'une baguette de protection latérale susceptible d'être montée sur la carrosserie de ce véhicule à l'aide de dispositifs de fixation conformes à l'invention.

Les figures 2, 3 et 4 montrent respectivement en coupe selon II-II figure 3, en vue latérale et en coupe selon IV-IV figure 3, un tel dispositif de fixation établi conformément à l'invention.

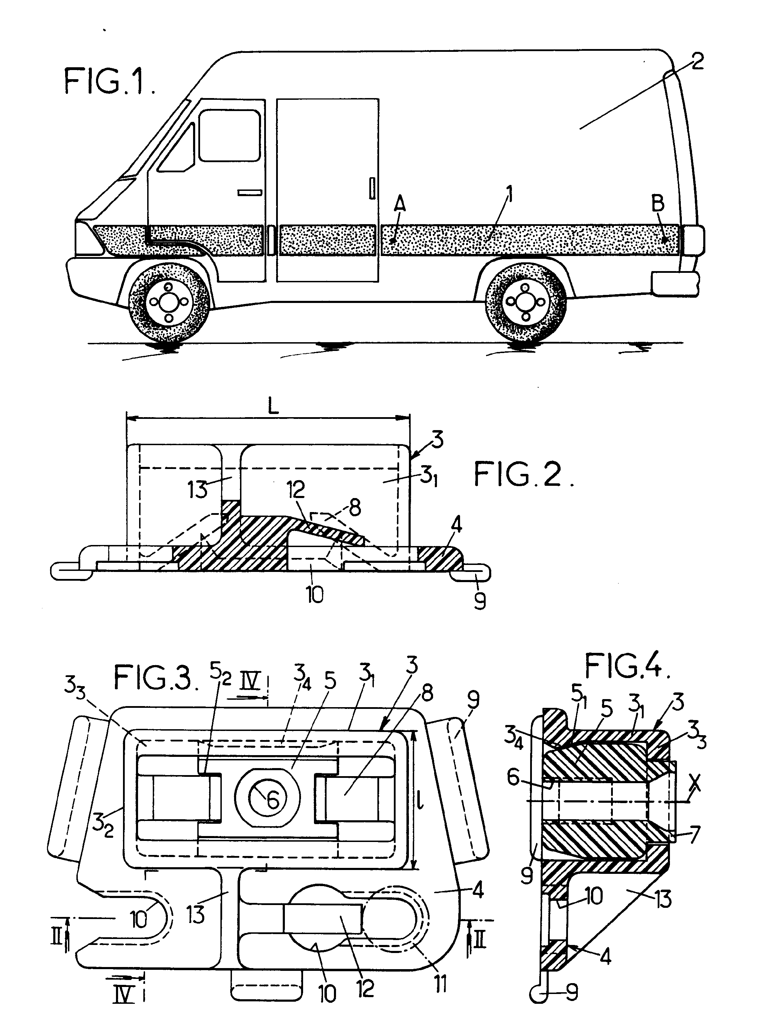

La baguette de protection qui longe le flanc du véhicule montré sur la figure 1 comprend plusieurs éléments juxtaposés bout à bout et celui relativement long, désigné par la référence 1, qui est rapporté sur la portion arrière dudit flanc 2, est fixé sur celle-ci en deux points A et B à l'aide de dispositifs de fixation établis selon l'invention.

Chaque dispositif comprend essentiellement une cage 3 présentant la forme générale d'un parallélépipède ou d'un prisme à base rectangulaire dont la longueur L est d'environ deux fois supérieure à la largeur l et dont l'une des bases est prolongée extérieurement par une embase plate 4 présentant la forme générale d'un trapèze isocèle.

La cage 3 est délimitée latéralement par deux grandes parois rectangulaires 3₁ et par deux petites parois rectangulaires 3₂ et le fond de cette cage est évidé tout comme son sommet.

Elle contient en sa zone médiane un dé 5 perforé par un alésage 6 d'axe X qui est monté de façon à pouvoir glisser transversalement le long des deux grandes parois 3₁.

Il est immobilisé, selon la direction de l'axe X, c'est-à-dire selon la direction perpendiculaire à l'embase 4 :
- d'une part, par deux rebords étroits 3₃ des grandes parois 3₁ qui sont rabattus vers l'intérieur de la cage du côté, de celle-ci, le plus éloigné de l'embase 4,
- et, d'autre part, par un renflement 3₄ faisant saillie intérieurement sur l'une des deux grandes parois 3₁ et venant buter contre une portée complémentaire 5₁ du dé 5.

Ce dé 5 comprend en outre un col 7 passant entre les deux rebords 3₃ et faisant légèrement saillie en dehors de la cage 3 pour une raison qui sera expliquée plus loin.

On voit encore sur les dessins, à l'intérieur de la cage 3, deux pattes élastiques 8 venues de moulage avec celle-ci et propres à prendre appui contre le dé 5 de façon à le solliciter constamment vers sa position médiane dans la cage 3.

Ces appuis sont avantageusement réalisés au fond de gorges 5₂ évidées latéralement dans le dé, ce qui améliore le guidage desdites pattes 8.

L'embase 4, quant à elle, est prolongée par trois bourrelets périphériques 9 constituant des portées d'application du dispositif contre la carrosserie tout en maintenant ce dispositif un peu à l'écart de celle-ci ce qui est avantageux pour des questions d'aération et d'élasticité du montage.

La portion élargie de l'embase 4 est évidée par deux lumières 10 allongées et alignées selon la direction de la longueur L, lumières dessinées de façon à pouvoir coagir, par un déplacement "en baïonette", avec des têtes de vis ou analogues préalablement plantées dans la carrosserie et écartées de celle-ci d'une distance sensiblement égale à l'épaisseur de l'embase 4.

D'une façon connue en soi en outre, une patte élastique 12 venue de moulage avec l'embase 4 est propre à venir en butée latéralement contre de telles têtes de vis 11 à la fin du montage à des fins de verrouillage.

Enfin un voile triangulaire 13 perpendiculaire à l'embase 4 et prenant appui contre une face extérieure d'une grande paroi 3₁ de la cage 3 sert à renforcer l'ensemble.

Le fonctionnement du dispositif de fixation qui vient d'être décrit est le suivant.

On commence par planter dans la portion carrosserie 2 qui servira de support à la pièce 1 à fixer, des paires de têtes de vis 11 respectivement en chacun des emplacements où l'on désire placer une cage.

Puis on monte une telle cage sur chacune des desdites paires de têtes 11 jusqu'à ce que ce montage soit verrouillé par la patte 12 concernée.

Il suffit ensuite de monter la pièce 1 sur les dés perforés 5 qui équipent les cages ainsi montées.

Cette fixation peut être faite directement par vissage de vis appropriées dans les dés 5 en question après traversée par ces vis de ladite pièce 1.

Si les dés sont des écrous, il s'agit de simples vissages.

Si au contraire les alésages 6 des dés 5 sont lisses, les vis peuvent y créer directement leurs filets.

Lorsque ces vissages sont terminés, le montage de la pièce 1 est achevé.

Si, après ce montage, la pièce 1 subit, du fait d'une dilatation différentielle, une déformation supérieure ou inférieure à celle de la carrosserie sur laquelle elle est montée, cette déformation se traduit tout simplement par un coulissement de compensation du dé 5 le long de sa cage de guidage 3 sans qu'il se produise aucune contrainte au niveau de la fixation ni aucune séparation ou "gondolement" entre la pièce montée et son support.

Il est à noter également que, en raison de la légère saillie du col 7 en dehors de la cage 3, on n'observe aucun contact entre la pièce 1 et les cages 3 de sorte qu'il ne risque pas d'y avoir de frottements entre ces pièces lors de leurs dilatations différentielles.

Les deux composants (cage et dé) du dispositif de fixation décrit ci-dessus sont avantageusement constitués en matière plastique, mais ils pourraient également être métalliques.

En suite de quoi, et quel que soit le mode de réalisation adopté, on obtient finalement un dispositif de fixation dont la constitution, le fonctionnement et les avantages résultent suffisamment de ce qui précède.

## Revendications

1. Dispositif pour fixer sur une carrosserie métallique (2) une pièce de parement ou analogue (1) constituée en un matériau présentant un coefficient de dilatation différent de celui constitutif de la carrosserie, le dispositif étant constitué par une cage (3) de forme parallélépipédique allongée selon la direction des déformations à compenser et prolongée extérieurement du côté destiné à être appliqué contre un support par une embase plate (4) perforée (en 10) de façon à pouvoir coagir avec au moins une tête d'ancrage (11) prévue sur le support, ladite cage étant ouverte de son côté le plus éloigné de l'embase et contenant un dé de fixation (5) perforé par un alésage (6) d'axe X perpendiculaire à l'embase, ce dé étant placé dans ladite cage de façon à pouvoir coulisser le long des deux grandes parois (3₁) de cette cage et à être au contraire emprisonné selon la direction de l'axe X.

2. Dispositif de fixation selon la revendication 1, caractérisé en ce que le dé (5) est un écrou.

3. Dispositif de fixation selon la revendication 1, caractérisé en ce que le dé (5) est évidé par un alésage destiné à servir de guide pour une vis de fixation creusant son filet dans ce dé.

4. Dispositif de fixation selon l'une quelconque des précédentes revendications, caractérisé en ce que l'emprisonnement du dé (5) dans la cage (3), selon la direction (X) perpendiculaire à l'embase, est assuré d'une part, par deux rebords étroits (3₃) des grandes parois (3₁) de la cage rabattus vers l'intérieur de cette cage, du côté le plus éloigné de l'embase et, d'autre part, par un renflement (3₄) faisant saillie intérieurement sur l'une des grandes parois (3₁) de la cage.

5. Dispositif de fixation selon la revendication 4, caractérisé en ce que le dé (5) comprend un col (7) traversant l'intervalle compris entre les deux rebords étroits (3₃) de la cage (3) et débordant légèrement en dehors de cette cage.

6. Dispositif de fixation selon l'une quelconque des précédentes revendications, caractérisé en ce que l'embase (4) qui prolonge la cage est bordée par des bourrelets étroits (9) constituant les portées d'application du dispositif contre le support.

7. Dispositif de fixation selon l'une quelconque des précédentes revendications, caractérisé en ce que l'embase (4) est évidée par deux lumières (10) allongées et alignées selon la direction de la longueur de la cage, lumières propres à coagir respectivement avec deux têtes d'ancrage (11) préalablement fixées sur le support (2).

8. Dispositif de fixation selon l'une quelconque des précédentes revendications, caractérisé en ce qu'il comporte un voile triangulaire de renfort (13) s'étendant perpendiculairement à l'embase (4) et raccordant celle-ci à l'une des grandes parois latérales (3₁) de la cage.

9. Dispositif de fixation selon l'une quelconque des précédentes revendications, caractérisé en ce que la cage (3) contient deux pattes élastiques (8) interposées chacune entre le dé perforé (5) et l'une des petites parois latérales (3₂), pattes propres à solliciter constamment le dé vers sa position médiane dans la cage.

## Patentansprüche

1. Vorrichtung zur Befestigung einer Zierleiste (1) oder dergleichen an der aus Metall bestehenden Karrosserie (2) eines Fahrzeuges, die aus einem Material besteht, dessen Ausdehnungskoeffizient sich von dem der Karosserie unterscheidet, wobei die Vorrichtung aus einem Käfig (3) mit parallelepipedischer Gestalt besteht, der sich in Richtung der zu kompensierenden Deformationen erstreckt und außen auf der Seite, die gegen eine Unterlage zur Anlage kommt, eine perforierte (in 10) Grundplatte (4) enthält, die mit wenigstens einem Befestigungskopf (11) zusammenwirkt, der an der Unterlage angebracht ist, wobei der Käfig an der Seite, die von der Grundplatte am weitesten entfernt ist, offen ist und einen Befestigungswürfel (5) enthält, der mit einer Bohrung (6) mit der Achse X versehen ist, die senkrecht zu der Platte verläuft und der so in dem Käfig angeordnet ist, daß er sich längs der beiden großen Wände (3₁) des Käfigs verschieben kann, während er im Gegensatz dazu in Richtung der Achse X unbeweglich ist.

2. Befestigungsvorrichtung nach Anspruch 1, dadurch gekennzeichnet, daß der Würfel (5) als Schraubmutter ausgebildet ist.

3. Befestigungsvorrichtung nach Anspruch 1, dadurch gekennzeichnet, daß der Würfel (5) eine Bohrung enthält, die als Führung für eine Befestigungsschraube dient, die ihr Gewinde in die Bohrung einschneidet.

4. Befestigungsvorrichtung nach einem der vorhergehenden Ansprüche, dadurch gekennzeichnet, daß der Würfel (5) in dem Käfig (3) in Richtung der Achse (X), die senkrecht zu der Grundplatte verläuft, einerseits durch zwei schmale Ränder (3₃) der großen Wandungen (3₁) des Käfigs, die zum Inneren des Käfigs auf der am weitesten von der Grundplatte entfernten Seite umgebogen sind und andererseits durch eine Wulst (3₄) gehalten wird, die innen an einer der beiden großen Wandungen (3₁) des Käfigs vorspringt.

5. Befestigungsvorrichtung nach Anspruch 4, dadurch gekennzeichnet, daß der Würfel (5) einen Kragen (7) enthält, der sich zwischen den beiden schmalen umgebogenen Rändern (3₃) des Käfigs (3) erstreckt durchquert und gegenüber dem Käfigs leicht nach außen übersteht.

6. Befestigungsvorrichtung nach einem der vorhergehenden Ansprüche, dadurch gekennzeichnet, daß die Grundplatte (4), die den Käfig verlängert, durch schmale Wülste (9) begrenzt wird, mit denen die Vorrichtung auf der Unterlage aufliegt.

7. Befestigungsvorrichtung nach einem der vorhergehenden Ansprüche, dadurch gekennzeichnet, daß die Unterlage (4) mit zwei Langlöchern versehen ist, die in Längsrichtung des Käfigs ausgerichtet sind und mit zwei entsprechenden Befestigungsköpfen (11) zusammenwirken können, die vorher in die Unterlage (2) eingesetzt sind.

8. Befestigungsvorrichtung nach einem der vorhergehenden Ansprüche, dadurch gekennzeichnet, daß sie eine dreieckförmige Verstärkungsscheibe (13) enthält, die sich senkrecht zur Grundplatte (4) erstreckt und diese mit einer der großen Seitenwände (3₁) des Käfigs verbindet.

9. Befestigungsvorrichtung nach einem der vorhergehenden Ansprüche, dadurch gekennzeichnet, daß der Käfig (3) zwei elastische Laschen (8) enthält, die jeweils zwischen dem mit der Bohrung versehenen Würfel (5) und einer der kleinen Seitenwände (3₂) eingefügt und so angeordnet sind, daß sie den Würfel ständig in seine mittlere Stellung in dem Käfig drücken.

## Claims

1. A device for securing an ornamental or similar component (1) to a metal car body (2), the component being made of a material having a different coefficient of expansion from the car body material, the device comprising a parallelepipedic cage (3) elongated in the direction of the deformations to be compensated and prolonged outside, on the side for pressing against a support, by a flat base (4) perforated(at 10) so as to co-operate with at least one anchoring head (11) provided on the support, the cage being open on its side furthest from the base and containing a securing die (5) perforated by a bore (6) having its axis (X) perpendicular to the base, the die being disposed in the cage so that it can slide along the two major walls (3₁) of the cage but is confined in the direction of the axis (X).

2. A securing device according to claim 1, characterised in that the die (5) is a nut.

3. A securing device according to claim 1, characterised in that the die (5) is formed with a bore serving as a guide for a self-tapping securing screw in the die.

4. A securing device according to any of the preceding claims, characterised in that the die (5) is confined in the cage (3) in the direction (X) perpendicular to the base by, on the one hand, two narrow edges (3₃) of the major walls (3₁) of the cage, the edges being bent down towards the interior of the cage, on the side furthest from the base and on the other hand by a bead (3₄) projecting internally from one of the major walls (3₁) of the cage.

5. A securing device according to claim 4, characterised in that the die (5) has a neck (7) which extends through the space between the two narrow edges (3₃) of the cage (3) and projects slightly outside the cage.

6. A securing device according to any of the preceding claims, characterised in that the base (4) prolonging the cage is bounded by narrow flanges (9) forming bearing surfaces for pressing the device against the support.

7. A securing device according to any of the preceding claims, characterised in that the base (4) is recessed by two elongate apertures (10) aligned in the lengthwise direction of the cage, the apertures being adapted to co-operate with two respective anchoring heads (11) previously secured to the support (2).

8. A securing device according to any of the preceding claims, characterised in that it comprises a triangular reinforcing web (13) extending perpendicular to the base (4) and connecting it to one of the major side walls (3₁) of the cage.

9. A securing device according to any of the preceding claims, characterised in that the cage (3) has two resilient lugs (8) each interposed between the perforated die (5) and one of the minor side walls (3₂), the lugs being adapted constantly to bias the die towards its central position in the cage.
